# EUROPEAN PATENT APPLICATION

(11) **EP 4 793 139 A1**
(43) Date of publication of application: **19.08.2026**
(21) Application number: 26153993.6
(22) Date of filing: 26.01.2026
(51) Int. Cl.: B62D 21/15, B62D 25/02, B62D 25/20

(54) **LOWER VEHICLE-BODY STRUCTURE OF VEHICLE**

(30) Priority: 14.02.2025 JP 2025022491
(71) Applicant: MAZDA MOTOR CORPORATION, Hiroshima 730-8670 (JP)
(72) Inventor: Seiji, Saito, Aki-gun, Hiroshima, 730-8670 (JP); Eiji, Kamemoto, Aki-gun, Hiroshima, 730-8670 (JP); Hirotaka, Natsume, Aki-gun, Hiroshima, 730-8670 (JP); Kazunori, Ishimoto, Aki-gun, Hiroshima, 730-8670 (JP); Isamu, Kizaki, Aki-gun, Hiroshima, 730-8670 (JP); Tomoe, Matsuoka, Aki-gun, Hiroshima, 730-8670 (JP); Takuya, Saeki, Aki-gun, Hiroshima, 730-8670 (JP); Sakai, Hiroshi, Aki-gun, Hiroshima, 730-8670 (JP)
(74) Representative: Lorenz Seidler Gossel Part. mbB

(57) **Abstract**

[Problem] To increase the amount of energy absorption of a side sill reinforcement against side collision energy.

[Means for Solution] A lower vehicle-body structure 1 of a vehicle 100 includes a floor panel 2, side sills 3, and reinforcements 30 disposed in the side sills 3, and extending in the front-rear direction. The reinforcement 30 includes an upper wall 31, a lower wall 32, an outer wall 33, and an inner wall 34. The reinforcement 30 further includes one or a plurality of vertical walls 35 extending in the front-rear direction between the outer wall 33 and the inner wall 34, and connecting the upper wall 31 and the lower wall 32 together, and an inner space S of the reinforcement 30 is partitioned in the vehicle width direction by the vertical walls 35 in such a way as to divided into a plurality of closed cross-section portions S1 to S3. At least one of the upper wall 31 or the lower wall 32 has a groove 36 in at least one of positions at which the vertical walls 35 are connected, the groove 36 extending in the front-rear direction over the entire length of the reinforcement 30.

## Description

### [Technical Field]

The present invention relates to a lower vehicle-body structure of a vehicle.

### [Background Art]

Patent Literature 1 discloses a side sill reinforcement member (hereinafter referred to as "reinforcement") disposed in the inner space of a side sill extending in the vehicle front-rear direction. This reinforcement extends in the vehicle front-rear direction, and includes a plurality of closed cross-sectional structures that are closed in the vehicle width direction and in the vehicle up-down direction and that surround a plurality of closed spaces arranged in the vehicle width direction. When a side collision load acts on the side sill from the outer side in the vehicle width direction, the reinforcement is collapsed in the vehicle width direction, thereby serving as an energy absorbing member that absorbs collision energy.

### [Citation List]

### [Patent Literature]

[Patent Literature 1] Japanese Patent Laid-Open No. 2021-130388

### [Summary of Invention]

### [Problems to be Solved by the Invention]

It is an object of the present disclosure to provide a lower vehicle-body structure of a vehicle that can increase the amount of energy absorption of a side sill reinforcement against side collision energy.

### [Means for Solving the Problems]

One aspect of the present disclosure provides a lower vehicle-body structure of a vehicle, the lower vehicle-body structure including:
a floor panel;
a pair of left and right side sills extending in a front-rear direction along both side edges of the floor panel; and
a pair of left and right reinforcements disposed in the pair of left and right side sills, respectively, and extending in the front-rear direction along the pair of left and right side sills, wherein
the reinforcement includes
   an upper wall forming an upper surface of the reinforcement, and extending in the front-rear direction,
   a lower wall forming a lower surface of the reinforcement, and extending in the front-rear direction,
   an outer wall connecting an outer edge portion of the upper wall in a vehicle width direction to an outer edge portion of the lower wall in the vehicle width direction, and extending in the front-rear direction, and
   an inner wall connecting an inner edge portion of the upper wall in the vehicle width direction to an inner edge portion of the lower wall in the vehicle width direction, and extending in the front-rear direction,
the reinforcement further includes one or a plurality of vertical walls extending in the front-rear direction between the outer wall and the inner wall, and connecting the upper wall and the lower wall together, and an inner space of the reinforcement is partitioned in the vehicle width direction by the one or plurality of vertical walls in such a way as to be divided into a plurality of closed cross-section portions, the inner space being defined by the upper wall, the lower wall, the outer wall, and the inner wall, and
at least one of the upper wall or the lower wall has a groove in at least one of positions at which the one or plurality of vertical walls are connected, the groove extending in the front-rear direction over an entire length of the reinforcement.

### [Advantageous Effects of Invention]

According to the present invention, since the reinforcement has a groove on at least one of the upper wall or the lower wall, when the reinforcement receives a side collision load from the outer side in the vehicle width direction, stress is concentrated at the groove. As a result, the portion of the upper wall and the lower wall that has the groove is likely to undergo recessed deformation in which the portion with the groove protrudes toward the inner side of the closed cross-section portion in the up-down direction.

Since the vertical wall is located on the inner side of the groove, the groove is less likely to be recessed toward the inner side of the inner space upon the recessed deformation. Therefore, in the closed cross-section portion, the upper wall or the lower wall may be deformed such that portions continuous with the groove are inclined outward using the recessed deformation at the groove as a base point. Further, in the closed cross-section portion, the vertical wall, the outer wall, or the inner wall is also located on the inner side of the end portion on the side opposite to the end portion having the groove. Accordingly, the end portion on the opposite side is also less likely to be deformed toward the inner side or the outer side of the closed cross-section.

As a result, in the closed cross-section portion, the upper wall or the lower wall can be caused to undergo, on the side with the groove, protruding deformation such that halfway portions in the width direction protrude toward the outer side of the closed cross-section portion. Accordingly, the closed cross-section portion can be caused to undergo protruding deformation to efficiently collapse the reinforcement in the width direction, while suppressing insufficient collapse of the reinforcement. Accordingly, it is possible to increase the amount of energy absorption of the reinforcement under a side collision load.

### [Brief Description of Drawings]

FIG. 1 is a plan view of a lower vehicle-body structure of a vehicle according to one embodiment of the present disclosure.
FIG. 2 is a cross-sectional view of a side sill and an area around the side sill taken along line II-II in FIG. 1.
FIG. 3 is a perspective view of a reinforcement as a single body.
FIG. 4A is a diagram schematically illustrating deformation behavior of the reinforcement in a side collision.
FIG. 4B is a diagram schematically illustrating deformation behavior of the reinforcement in the side collision, following FIG. 4A.

### [Mode for Carrying Out the Invention]

A lower vehicle-body structure 1 of a vehicle 100 according to one embodiment of the present disclosure will be described below with reference to the attached drawings. The following description is merely exemplary in nature, and is not intended to limit the present invention, its application, or uses.

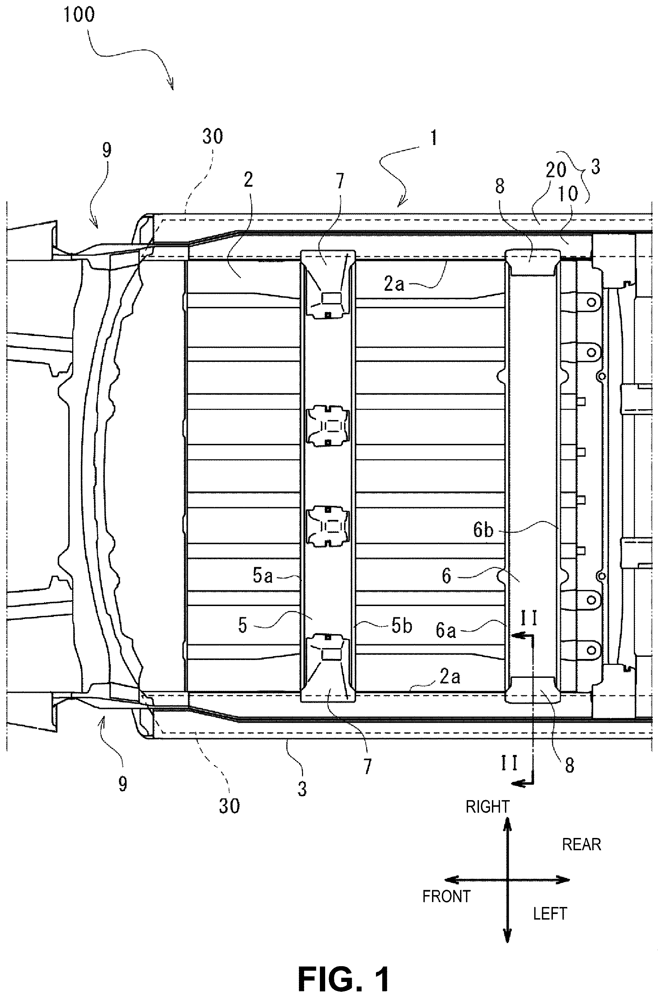

FIG. 1 is a plan view of the lower vehicle-body structure 1 of the vehicle 100 according to the present embodiment. In the following description, the vehicle front-rear direction, the vehicle width direction, and the vehicle up-down direction of the vehicle 100 may be respectively referred to as "front-rear direction", "width direction", and "up-down direction" of the lower vehicle-body structure 1 or a component. In the following description, the side closer to the center line of the vehicle in the vehicle width direction may be referred to as vehicle-width-direction inner side, and the side opposite to the center line of the vehicle in the vehicle width direction may be referred to as vehicle-width-direction outer side. In addition, the vehicle width direction corresponds to the left-right direction of the vehicle.

As shown in FIG. 1, the lower vehicle-body structure 1 of the vehicle 100 includes a floor panel 2 forming a floor surface in a vehicle cabin, and a pair of left and right side sills 3 extending in the front-rear direction along both left and right side edges of the floor panel 2. The vehicle 100 in the present embodiment is an electric vehicle, such as an electric automobile, and thus including neither an internal combustion engine nor a transmission and hence neither an exhaust gas pipe nor a propeller shaft is disposed below the floor panel 2, and a so-called tunnel protruding upward and extending in the front-rear direction is not formed at the center of the floor panel 2 in the vehicle width direction.

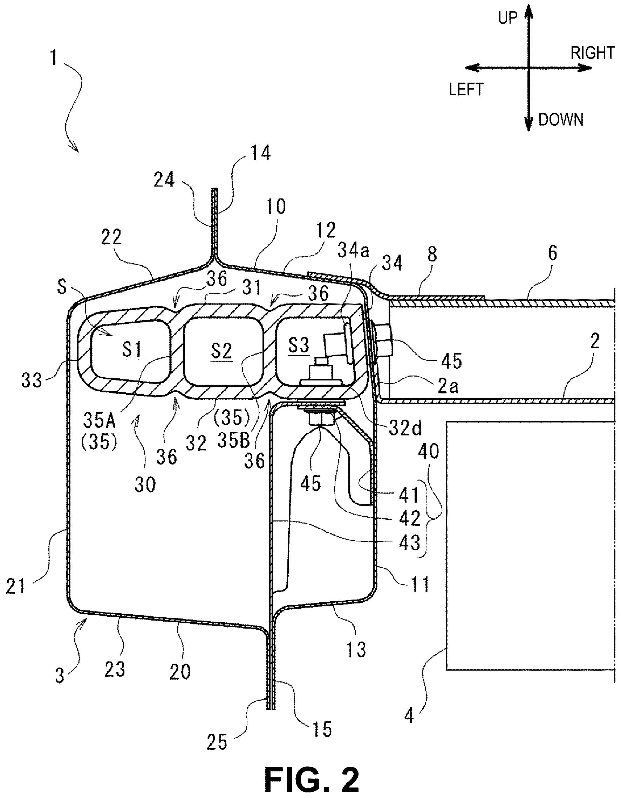

The floor panel 2 is a press-formed product made from a steel plate. The floor panel 2 includes outer flanges 2a extending upward from the outer end portions of the floor panel 2 in the vehicle width direction (see also FIG. 2). The floor panel 2 extends in the horizontal direction in a substantially flat shape. A battery case 4 (see FIG. 2) is disposed on the lower surface side of the floor panel 2 to extend between the pair of left and right side sills 3.

A first cross member 5 and a second cross member 6 extending in the vehicle width direction are disposed on the upper surface of the floor panel 2. The first cross member 5 is a seat cross member on which front seats (not shown in the drawing) are mounted. The second cross member 6 is located behind the first cross member 5.

Each of the first cross member 5 and the second cross member 6 is a press-formed product made from a steel plate, and is formed to have a hat-shaped cross section open downward. The first cross member 5 includes a front flange 5a and a rear flange 5b at the lower edge portions thereof, and the second cross member 6 includes a front flange 6a and a rear flange 6b at the lower edge portions thereof. The first cross member 5 and the second cross member 6 are joined to the floor panel 2 by spot welding via the front flanges 5a, 6a and the rear flanges 5b, 6b. The first cross member 5 and the second cross member 6, in cooperation with the floor panel 2, constitute a closed cross-sectional structure extending in the vehicle width direction.

Seat brackets 7 are attached to both end portions of the first cross member 5 in the vehicle width direction to fix the front seats not shown in the drawing. Each seat bracket 7 is a press-formed product made from a steel plate. The seat bracket 7 is joined to the first cross member 5 and the side sill 3 by spot welding. Accordingly, both end portions of the first cross member 5 in the vehicle width direction are coupled to the pair of left and right side sills 3 via the seat brackets 7.

In the same manner, gussets 8 are attached to both end portions of the second cross member 6. Each gusset 8 is a press-formed product made from a steel plate. The gusset 8 is joined to the second cross member 6 and the side sill 3 by spot welding. Accordingly, both end portions of the second cross member 6 in the vehicle width direction are coupled to the pair of left and right side sills 3 via the gussets 8.

FIG. 2 is a longitudinal cross-sectional view of the left side sill 3 at a portion connected to the second cross member 6, and of an area around the portion, taken along the vehicle width direction, that is, along line II-II in FIG. 1. As shown in FIG. 2, the side sill 3 includes a side sill inner portion 10 formed to have a hat-shaped cross section which is open toward the vehicle-width-direction outer side, and a side sill outer portion 20 formed to have a hat-shaped cross section which is open toward the inner side. Each of the side sill inner portion 10 and the side sill outer portion 20 is a press-formed product made from a steel plate.

The side sill inner portion 10 includes an inner vertical wall 11 extending in the up-down direction on the vehicle-width-direction inner side, an inner upper wall 12 extending in toward the vehicle-width-direction outer side from the upper end portion of the inner vertical wall 11, an inner lower wall 13 extending toward the vehicle-width-direction outer side from the lower end portion of the inner vertical wall 11, an inner upper flange 14 extending upward from the outer end portion of the inner upper wall 12 in the vehicle width direction, and an inner lower flange 15 extending downward from the outer end portion of the inner lower wall 13 in the vehicle width direction.

The inner vertical wall 11 extends in the direction from the lower surface to the upper surface of the floor panel 2, that is, in the up-down direction. The outer flange 2a of the floor panel 2 is joined to each inner vertical wall 11 by spot welding.

The side sill outer portion 20 includes an outer vertical wall 21 extending in the up-down direction on the vehicle-width-direction outer side, an outer upper wall 22 extending toward the vehicle-width-direction inner side from the upper end portion of the outer vertical wall 21, an outer lower wall 23 extending toward the vehicle-width-direction inner side from the lower end portion of the outer vertical wall 21, an outer upper flange 24 extending upward from the inner end portion of the outer upper wall 22 in the vehicle width direction, and an outer lower flange 25 extending downward from the inner end portion of the outer lower wall 23 in the vehicle width direction.

The side sill inner portion 10 and the side sill outer portion 20 are joined together by spot welding at the upper flanges 14, 24 of the side sill inner portion 10 and the side sill outer portion 20, and at the lower flanges 15, 25 of the side sill inner portion 10 and the side sill outer portion 20, so that the side sill 3 is formed to have a closed cross-sectional structure extending in the front-rear direction.

A reinforcement 30 and reinforcement brackets 40 are disposed in each side sill 3, the reinforcement brackets 40 fixing the reinforcement 30 to the side sill 3. As shown in FIG. 1, the reinforcement 30 extends in the front-rear direction over substantially the entire length of the side sill 3. In the present embodiment, the reinforcement 30 extends forward beyond the front end portion of the side sill 3, and the front end portion of the reinforcement 30 is located inward of the lower portion of a hinge pillar 9 (only an inner pillar being shown in FIG. 1).

The reinforcement bracket 40 is a press-formed product made from a steel plate. The reinforcement brackets 40 are provided in the side sill 3 at a plurality of positions spaced apart from each other in the front-rear direction. For example, the reinforcement bracket 40 may be provided on the hinge pillar 9 or a B pillar (not shown in the drawing) at a skirt portion extending in the front-rear direction, in such a way as to be connected to the side sill 3.

The reinforcement bracket 40 includes a bracket first wall 41 extending in the up-down direction on the vehicle-width-direction inner side, a bracket second wall 42 extending toward the vehicle-width-direction outer side from the upper end portion of the bracket first wall 41, and a bracket third wall 43 extending downward from the outer end portion of the bracket second wall 42 in the vehicle width direction, and the reinforcement bracket 40 is formed in an inverted U shape as viewed from the front-rear direction. The bracket first wall 41 of the reinforcement bracket 40 is joined to the inner vertical wall 11 by spot welding from the outer side in the vehicle width direction, and the bracket third wall 43, the inner lower flange 15, and the outer lower flange 25 is joined together by spot welding with the lower end portion of the bracket third wall 43 interposed between the inner lower flange 15 and the outer lower flange 25.

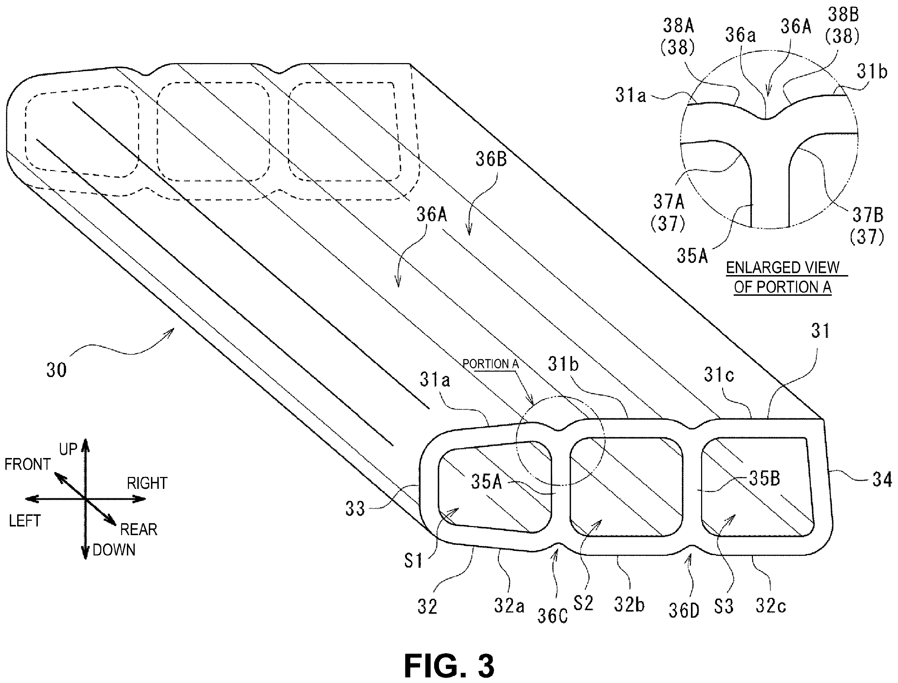

The reinforcement 30 will be now described with reference to FIG. 2 and FIG. 3. The reinforcement 30 extends in the front-rear direction over the entire length in the cross-sectional shape shown in FIG. 2. In the present embodiment, the reinforcement 30 is an extruded member made of aluminum alloy. The reinforcement 30 is fastened to the inner vertical wall 11 with bolts in the vehicle width direction, and is also fastened to the bracket second wall 42 of the reinforcement bracket 40 with bolts in the up-down direction, thereby being fixed to the side sill 3.

The reinforcement 30 has a rectangular cross-sectional shape elongated in the vehicle width direction and shown in FIG. 2, and includes an upper wall 31 forming the upper surface of the reinforcement 30 and extending in the front-rear direction, a lower wall 32 forming the lower surface of the reinforcement 30 and extending in the front-rear direction, an outer wall 33 connecting the outer edge portion of the upper wall 31 in the vehicle width direction to the outer edge portion of the lower wall 32 in the vehicle width direction, and extending in the front-rear direction, and an inner wall 34 connecting the inner edge portion of the upper wall 31 in the vehicle width direction to the inner edge portion of the lower wall 32 in the vehicle width direction, and extending in the front-rear direction. In other words, the upper wall 31 and the lower wall 32 substantially extends in the horizontal direction, and face each other in the up-down direction. The outer wall 33 and the inner wall 34 extend in the front-rear direction and in the up-down direction, and face each other in the vehicle width direction.

An inner space S having a rectangular cross-sectional shape is defined in the reinforcement 30 by the upper wall 31, the lower wall 32, the outer wall 33, and the inner wall 34.

The reinforcement 30 further includes a plurality of vertical walls 35 extending in the front-rear direction between the outer wall 33 and the inner wall 34, and connecting the upper wall 31 and the lower wall 32 together. In the present embodiment, the reinforcement 30 includes two vertical walls 35 including a first vertical wall 35A located on the vehicle-width-direction outer side, and a second vertical wall 35B located on the vehicle-width-direction inner side. The inner space S of the reinforcement 30 is partitioned in the vehicle width direction by the plurality of vertical walls 35 in such a way as to be divided into a plurality of closed cross-section portions: a first closed cross-section portion S1, a second closed cross-section portion S2, and a third closed cross-section portion S3, which are arranged in this order from the outer side in the vehicle width direction.

As shown in FIG. 3, the upper wall 31 is partitioned in the vehicle width direction by the plurality of vertical walls 35 into a first upper wall 31a, a second upper wall 31b, and a third upper wall 31c, which are arranged in this order from the outer side in the vehicle width direction. In the same manner, the lower wall 32 is partitioned in the vehicle width direction by the plurality of vertical walls 35 into a first lower wall 32a, a second lower wall 32b, and a third lower wall 32c, which are arranged in this order from the outer side in the vehicle width direction.

The first closed cross-section portion S1 is defined by the first upper wall 31a, the first lower wall 32a, the outer wall 33, and the first vertical wall 35A to form a rectangular closed cross-section. The second closed cross-section portion S2 is defined by the second upper wall 31b, the second lower wall 32b, the first vertical wall 35A, and the second vertical wall 35B to form a rectangular closed cross-section. The third closed cross-section portion S3 is defined by the third upper wall 31c, the third lower wall 32c, the second vertical wall 35B, and the inner wall 34 to form a rectangular closed cross-section.

In the present embodiment, as shown in FIG. 2, the third closed cross-section portion S3 of the reinforcement 30 is fastened to the side sill inner portion 10 and to the reinforcement bracket 40 with bolts. To be more specific, the inner wall 34 of the third closed cross-section portion S3 is provided with a female screw part 34a penetrating through the inner wall 34 in the vehicle width direction, and the third lower wall 32c (see FIG. 3) of the third closed cross-section portion S3 is provided with a female screw part 32d penetrating through the third lower wall 32c in the up-down direction. In the present embodiment, blind nuts are used as the female screw parts 32d, 34a, so that the female screw parts 32d, 34a can be provided at halfway portions of the reinforcement 30, which is an extruded member, in the front-rear direction.

The reinforcement 30 is fixed to the inner vertical wall 11 by causing a fastening bolt 45 to penetrate through the inner vertical wall 11 from the inner side of the inner vertical wall 11 in the vehicle width direction, and to be fastened to the female screw part 34a, with the inner wall 34 in contact with the inner vertical wall 11 from the outer side in the vehicle width direction. The reinforcement 30 is fixed to the reinforcement bracket 40 by causing a fastening bolt 45 to penetrate through the bracket second wall 42 from the lower side of the bracket second wall 42, and to be fastened to the female screw part 32d, with the lower wall 32 in contact with the bracket second wall 42 of the reinforcement bracket 40 from above.

In the state in which the reinforcement 30 is disposed in the side sill 3, the reinforcement 30 is spaced apart from the side sill inner portion 10, except for the inner vertical wall 11, toward the inner side within the inner space S, and is spaced apart from the side sill outer portion 20 toward the inner side within the inner space S.

In the present embodiment, each of the upper wall 31 and the lower wall 32 has grooves 36 at positions where the vertical walls 35 are formed, the grooves 36 being recessed toward the inner side of the inner space S. The grooves 36 extend in the front-rear direction over the entire length of the reinforcement 30. The grooves 36 include a first groove 36A, a second groove 36B, a third groove 36C, and a fourth groove 36D. The first groove 36A and the second groove 36B are formed on the upper wall 31 in positions at which the first vertical wall 35A and the second vertical wall 35B are connected, the third groove 36C and the fourth groove 36D are formed on the lower wall 32 in positions at which the first vertical wall 35A and the second vertical wall 35B are connected.

Although the first groove 36A will be described more specifically hereinafter, the second groove 36B, the third groove 36C, and the fourth groove 36D also have substantially the same configuration and hence they will not be described. As shown in the enlarged view of a portion A in FIG. 3, in the first closed cross-section portion S1, a first corner rounded part 37A is formed on the inner surface at the connection part between the first vertical wall 35A and the first upper wall 31a, and a first round chamfered part 38A is formed on the outer surface at the corner portion between the first upper wall 31a and the first vertical wall 35A. The first corner rounded part 37A and the first round chamfered part 38A extend parallel to each other, and the curvature center of the first corner rounded part 37A and the curvature center of the first round chamfered part 38A are aligned.

In the same manner, in the second closed cross-section portion S2, a second corner rounded part 37B is formed on the inner surface at the connection part between the first vertical wall 35A and the second upper wall 31b, and a second round chamfered part 38B is formed on the outer surface at the corner portion between the second upper wall 31b and the first vertical wall 35A. The second corner rounded part 37B and the second round chamfered part 38B extend parallel to each other, and the curvature center of the second corner rounded part 37B and the curvature center of the second round chamfered part 38B are aligned.

The outer portion of the first groove 36A in the vehicle width direction is formed of the first round chamfered part 38A, the inner portion of the first groove 36A in the vehicle width direction is formed of the second round chamfered part 38B, and the center portion of the first groove 36A in the vehicle width direction is formed of a groove bottom corner rounded part 36a, which connects the first round chamfered part 38A and the second round chamfered part 38B together. The groove bottom corner rounded part 36a is located on the center line of the first vertical wall 35A in the thickness direction. The groove 36 is formed of the chamfered parts 38, which are parallel to the corner rounded parts 37, and hence the reinforcement 30 has a substantially constant wall thickness. The dimension of the groove 36 in the vehicle width direction decreases toward the inner side of the inner space S.

The lower vehicle-body structure 1 of the vehicle 100 according to the present disclosure can provide the following advantageous effects.
(1) The lower vehicle-body structure 1 of the vehicle 100 includes:
   the floor panel 2;
   the pair of left and right side sills 3 extending in the front-rear direction along both left and right side edges of the floor panel 2; and
   the pair of left and right reinforcements 30 disposed in the pair of left and right side sills 3, respectively, and extending in the front-rear direction along the pair of left and right side sills 3, wherein the reinforcement 30 includes
   the upper wall 31 forming the upper surface of the reinforcement 30, and extending in the front-rear direction,
   the lower wall 32 forming the lower surface of the reinforcement 30, and extending in the front-rear direction,
   the outer wall 33 connecting the outer edge portion of the upper wall 31 in the vehicle width direction to the outer edge portion of the lower wall 32 in the vehicle width direction, and extending in the front-rear direction, and
   the inner wall 34 connecting the inner edge portion of the upper wall 31 in the vehicle width direction to the inner edge portion of the lower wall 32 in the vehicle width direction, and extending in the front-rear direction,
   the reinforcement 30 further includes the vertical walls 35 extending in the front-rear direction between the outer wall 33 and the inner wall 34, and connecting the upper wall 31 and the lower wall 32 together, and the inner space S of the reinforcement 30 is partitioned in the vehicle width direction by the vertical walls 35 in such a way as to be divided into the first to third closed cross-section portions S1 to S3, the inner space S being defined by the upper wall 31, the lower wall 32, the outer wall 33, and the inner wall 34, and
   at least one of the upper wall 31 or the lower wall 32 has the grooves 36 at the positions to which the vertical walls 35 are connected, the grooves 36 extending in the front-rear direction over the entire length of the reinforcement 30.

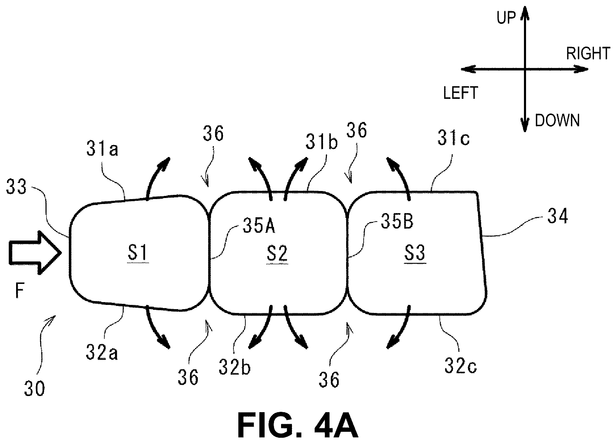

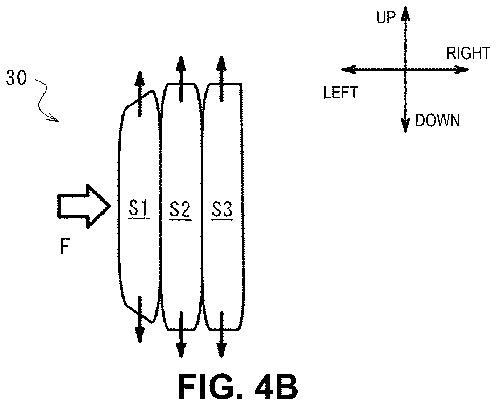

FIGS. 4A and 4B are diagrams schematically illustrating the deformation behavior of the reinforcement 30 when the reinforcement 30 receives a side collision load F from the outer side in the vehicle width direction. In FIGS. 4A and 4B, the reinforcement 30 is illustrated with lines in a simplified manner. As shown in FIG. 4A, since the upper wall 31 and the lower wall 32 of the reinforcement 30 have the grooves 36, when the reinforcement 30 receives a side collision load F from the outer side in the vehicle width direction, stress is concentrated at the grooves 36. As a result, the portions of the upper wall 31 and the lower wall 32 that have the grooves 36 are likely to undergo recessed deformation in which the portions having the grooves 36 protrude toward the inner side of the first to third closed cross-section portions S1 to S3 in the up-down direction.

As the vertical walls 35 are located on the inner side of the grooves 36, the grooves 36 are less likely to be recessed toward the inner side of the inner space S upon the recessed deformation. Therefore, in each of the closed cross-section portions S1 to S3, the upper wall 31 or the lower wall 32 may be deformed such that portions continuous with the grooves 36 are inclined outward using the recessed deformation at the grooves 36 as base points. Furthermore, in each of the closed cross-section portions S1 to S3, the vertical wall 35, the outer wall 33, or the inner wall 34 is located on the inner side of the end portion on the side opposite to the end portion having the groove 36; hence, the end portion on the side opposite to the end portion having the groove 36 is less likely to be deformed toward the inner side or the outer side of the closed cross-section.

As a result, in each of the closed cross-section portions S1 to S3, the upper wall 31 or the lower wall 32 can be caused to undergo, on the side having the grooves 36, protruding deformation such that halfway portions in the width direction protrude toward the outer side of each of the closed cross-section portions S1 to S3. Accordingly, each of the closed cross-section portions S1 to S3 can be caused to undergo protruding deformation to efficiently collapse the reinforcement 30 in the vehicle width direction while suppressing insufficient collapse of the reinforcement 30, as shown in FIG. 4B. Accordingly, it is possible to increase the amount of energy absorption of the reinforcement 30 under the side collision load F.

As in the case of the present embodiment, even in the case in which the floor panel 2 has no tunnel and so provides no energy absorbing effect from a tunnel under the side collision load F, more effective resistance to the side collision load F can be achieved by increasing the amount of energy absorption of the reinforcement 30. This leads to a reduced amount of intrusion of the side sill 3 toward the inner side in the vehicle width direction during a side collision, thereby suppressing the interruption of the side sill 3 with the battery case 4 disposed below the floor panel 2 and located between the pair of side sills 3. Thus, it is possible to increase the protection performance on the battery case 4.
(2) The reinforcement 30 includes, in the inner space S, the plurality of vertical walls 35 spaced apart from each other in the vehicle width direction, and
each of the upper wall 31 and the lower wall 32 has the grooves 36 at the plurality of positions to which the plurality of vertical walls 35 are connected.

As a result, the grooves 36 are formed on the upper wall 31 and the lower wall 32 of the reinforcement 30 at the positions between the first closed cross-section portion S1 and the second closed cross-section portion S2 and between the second closed cross-section portion S2 and the third closed cross-section portion S3. As a result, the grooves 36 are formed at both end portions of each of the upper wall 31 and the lower wall 32 in the vehicle width direction of each of the first to third closed cross-section portions S1 to S3. Thus, upon receiving a side collision load from the outer side in the vehicle width direction, the first, the second and the third closed cross-section portions S1-S3 will undergo protruding deformation more reliably. Accordingly, insufficient collapse of the reinforcement 30 is further suppressed, and the reinforcement 30 can be further efficiently collapsed in the vehicle width direction. Hence, it is possible to further increase the amount of energy absorption of the reinforcement 30 under the side collision load F.
(3) The upper wall 31 and the lower wall 32 of each of the closed cross-section portions S1 to S3 extend in a straight line.

Hence, compared with the case in which neither the upper wall 31 nor the lower wall 32 is formed in a straight line (being in a curved form or a bent form, for example), it is possible to increase the amount of energy absorbed when the upper wall 31 and the lower wall 32 are caused to undergo protruding deformation.
(4) The outer wall 33, the inner wall 34 and the plurality of vertical walls 35 extend in a straight line.

As a result, a uniform deformation of the reinforcement 30 in the vehicle-width direction is improved.
(5) Each of the first to third closed cross-section portions S1 to S3 has a rectangular shape in a cross section orthogonal to the front-rear direction.

As a result, the upper wall 31 and the lower wall 32 of each of the first to third closed cross-section portions S1 to S3 extend in a straight line. Hence, compared with the case in which neither the upper wall 31 nor the lower wall 32 is formed in a straight line (being in a curved form or a bent form, for example), it is possible to increase the amount of energy absorbed when the upper wall 31 and the lower wall 32 are caused to undergo protruding deformation.
(6) The corner rounded parts 37 are formed on the inner surface at the connection part between the vertical wall 35 and the upper wall 31 and at the connection part between the vertical wall 35 and the lower wall 32, and
the grooves 36 extend in a rounded shape along the corner rounded parts 37.

As a result, a constant wall thickness of the reinforcement 30 is easily maintained while the grooves 36 are formed on the reinforcement 30. As a result, the reinforcement 30 can be easily and stably formed by extrusion, for example.

The lower vehicle-body structure 1 of a vehicle according to the present disclosure is not limited to the configuration described in the above-mentioned embodiment, and various modifications are conceivable.

In the above-mentioned embodiment, the grooves 36 are formed on the upper wall 31 and the lower wall 32 at the positions to which the vertical walls 35 are connected. However, this is not a limitation. The grooves 36 may be formed only on one of the upper wall 31 or the lower wall 32, and the groove 36 may be formed at least at one of a plurality of connection positions to which the plurality of vertical walls 35 are connected.

In the above-mentioned embodiment, each groove 36 is formed using two round chamfered parts 38 such that the dimension of the groove 36 in the vehicle width direction decreases toward the inner side of the inner space S. However, this is not a limitation. The groove 36 may be formed in any shape, such as a rectangular shape, a semicircular shape, or a triangular shape. In the case in which the reinforcement 30 is formed of an extruded member, it is preferable to form the grooves 36 such that the reinforcement 30 has a constant wall thickness.

In the above-mentioned embodiment, the reinforcement 30 is formed of an extruded member. However, this is not a limitation. The reinforcement 30 may be formed by any method, such as casting, mechanical processing, or a sheet metal welding structure.

In the above-mentioned embodiment, the first to third upper walls 31a to 31c and the first to third lower walls 32a to 32c are formed in a straight line. However, this is not a limitation. Each of the first to third upper walls 31a to 31c and the first to third lower walls 32a to 32c may be formed to be curved upward or downward relative to the vehicle width direction, and may be formed to have an angular portion that is bent upward or downward relative to the vehicle width direction. Also in this case, from the viewpoint of suppressing insufficient collapse, it is desirable that each of the first to third upper walls 31a to 31c and the first to third lower walls 32a to 32c be formed to protrude toward the outer side of the inner space S to prevent recessed deformation in which the wall protrudes toward the inner side of the inner space S.

In the above-mentioned embodiment, the first to third upper walls 31a to 31c and the first to third lower walls 32a to 32c are formed to extend substantially parallel to the horizontal direction. However, this is not a limitation. Each of the first to third upper walls 31a to 31c and the first to third lower walls 32a to 32c may be formed to be inclined toward the outer side or the inner side of the inner space S and toward one side in the vehicle width direction. In this case, the inner space S is partitioned into closed cross-section portions S1 to S3 having a trapezoidal shape in cross section. In each of the first to third upper walls 31a to 31c and the first to third lower walls 32a to 32c, a portion inclined toward the inner side of the inner space S and toward the position to which the vertical wall 35 is connected is likely to undergo recessed deformation in which the portion protrudes toward the inner side of the inner space S, whereas the remaining portions are likely to undergo protruding deformation.

In the above-mentioned embodiment, the description has been made by taking, as an example, the case in which two vertical walls 35 are used. However, this is not a limitation. One vertical wall 35 may be used, or three or more vertical walls 35 may be used.

### [Reference Signs List]

- 1: lower vehicle-body structure
- 2: floor panel
- 3: side sill
- 4: battery case
- 10: side sill inner portion
- 20: side sill outer portion
- 30: reinforcement
- 31: upper wall
- 32: lower wall
- 33: outer wall
- 34: inner wall
- 35: vertical wall
- 36: groove
- 37: corner rounded part
- 38: chamfered part
- 40: reinforcement bracket
- 45: fastening bolt
- 100: vehicle
- S: inner space
- S1: first closed cross-section portion
- S2: second closed cross-section portion
- S3: third closed cross-section portion

## Claims

1. A lower vehicle-body structure (1) of a vehicle (100), the lower vehicle-body structure (1) comprising:
a floor panel (2);
a pair of left and right side sills (3) extending in a front-rear direction along both side edges of the floor panel (2); and
a pair of left and right reinforcements (30) disposed in the pair of left and right side sills (3), respectively, and extending in the front-rear direction along the pair of left and right side sills (3), wherein
the reinforcement (30) includes:
an upper wall (31) forming an upper surface of the reinforcement (30), and extending in the front-rear direction;
a lower wall (32) forming a lower surface of the reinforcement (30), and extending in the front-rear direction;
an outer wall (33) connecting an outer edge portion of the upper wall (31) in a vehicle width direction to an outer edge portion of the lower wall (32) in the vehicle width direction, and extending in the front-rear direction; and
an inner wall (34) connecting an inner edge portion of the upper wall (31) in the vehicle width direction to an inner edge portion of the lower wall (32) in the vehicle width direction, and extending in the front-rear direction,
the reinforcement (30) further includes one or a plurality of vertical walls (35) extending in the front-rear direction between the outer wall (33) and the inner wall (34), and connecting the upper wall (31) and the lower wall (32) together, and an inner space (S) of the reinforcement is partitioned in the vehicle width direction by the one or plurality of vertical walls (35) in such a way as to be divided into a plurality of closed cross-section portions (S1, S2, S3), the inner space (S) being defined by the upper wall (31), the lower wall (32), the outer wall (33), and the inner wall (34), and
at least one of the upper wall (31) or the lower wall (32) has a groove (36) in at least one of positions at which the one or plurality of vertical walls (35) are connected, the groove (36) extending in the front-rear direction over an entire length of the reinforcement (30).

2. The lower vehicle-body structure (1) of a vehicle according to claim 1, wherein
the reinforcement (30) includes, in the inner space (S), the plurality of vertical walls (35) spaced apart from each other in the vehicle width direction, and
each of the upper wall (31) and the lower wall (32) has the grooves (36) at a plurality of positions at which the plurality of vertical walls (35) are connected.

3. The lower vehicle-body structure (1) of a vehicle according to claim 1 or claim 2, wherein
the upper wall (31) and the lower wall (32) of each of the closed cross-section portions (S1, S2, S3) extend in a straight line.

4. The lower vehicle-body structure (1) of a vehicle according to any one of the preceding claims, wherein the outer wall (33), the inner wall (34) and the one or plurality of vertical walls (35) extend in a straight line.

5. The lower vehicle-body structure (1) of a vehicle according to any one of the preceding claims, wherein
each of the plurality of closed cross-section portions (S1, S2, S3) has an essentially rectangular shape in a cross section orthogonal to the front-rear direction.

6. The lower vehicle-body structure (1) of a vehicle according to any one of the preceding claims, wherein
a corner rounded part (37) is formed on the inner surface at each of a connection part between the vertical wall (35) and the upper wall (31) and a connection part between the vertical wall (35) and the lower wall (32), and
the groove (36) extends in a rounded shape along the corner rounded part (37).

7. The lower vehicle-body structure (1) of a vehicle according to any one of the preceding claims, wherein
the upper wall (31) and the lower wall (32) of each of the closed cross-section portions (S1, S2, S3) have a constant wall thickness,
and/or
the outer wall (33), the inner wall (34) and the one or plurality of vertical walls (35) each have a constant wall thickness.

8. The lower vehicle-body structure (1) of a vehicle according to any one of the preceding claims, wherein
the reinforcement (30) extends in the front-rear direction over substantially the entire length of the side sill (3)
and/or
the reinforcement (30) has the same cross-sectional shape over its entire extension in the front-rear direction
and/or
the reinforcement (30) is an extruded member.

9. The lower vehicle-body structure (1) of a vehicle according to any one of the preceding claims, wherein
the reinforcement 30 is made of aluminum alloy.

10. The lower vehicle-body structure (1) of a vehicle according to any one of the preceding claims, wherein
the inner wall (34) of the reinforcement (30) is fastened to an inner vertical wall (11) of the side sill.

11. The lower vehicle-body structure (1) of a vehicle according to claim 10, wherein
the inner wall (34) of the reinforcement (30) is fastened to an inner vertical wall (11) of the side sill with bolts in the vehicle width direction, wherein preferably, the inner wall (34) is provided with a female screw part (34a) penetrating through the inner wall (34) in the vehicle width direction, and a fastening bolt (45) penetrates through the inner vertical wall (11) of the side sill from the inner side of the inner vertical wall (11) in the vehicle width direction and is fastened to the female screw part (34a).

12. The lower vehicle-body structure (1) of a vehicle according to any one of the preceding claims, wherein
and the lower wall (32) of the reinforcement (30) is fastened by a bracket to the side sill (3).

13. The lower vehicle-body structure (1) of a vehicle according to claim 12, wherein
the lower wall (32c) of an innermost closed cross-section portion (S3) is connected to a bracket upper wall (42) of the reinforcement bracket (40),
and/or
wherein the lower wall (32) of the reinforcement (30) is connected to a bracket upper wall (42) of the reinforcement bracket (40) with bolts in the up-down direction,
wherein preferably, the lower wall (32) of the reinforcement (30) is provided with a female screw part (32d) penetrating through the lower wall (32) in the up-down direction, and a fastening bolt (45) penetrates through the bracket upper wall (42) from the lower side of the bracket upper wall (42) and is fastened to the female screw part (32).

14. The lower vehicle-body structure (1) of a vehicle according to any one of the preceding claims, wherein
the outer wall (33) of the reinforcement (30) is spaced apart from an outer vertical wall (21) of the side sill,
wherein preferably,
the reinforcement (30) is spaced apart from the side sill except for the inner vertical wall (11), which is in contact with the side sill.

15. A vehicle comprising a lower vehicle-body structure (1) of a vehicle according to any one of the preceding claims.
